(19) Europäisches Patentamt
European Patent Office
Office européen des brevets

(11) Publication number: 0 070 658
B1

(12) EUROPEAN PATENT SPECIFICATION

(45) Date of publication of patent specification: 16.09.87

(51) Int. Cl.⁴: **C 08 J 9/00,** C 08 J 9/36, C 09 K 19/38 // C08L67/00

(21) Application number: 82303608.2

(22) Date of filing: 09.07.82

# (54) High performance foams of thermotropic liquid crystal polymers.

(30) Priority: 13.07.81 US 282888
13.07.81 US 282828

(43) Date of publication of application:
26.01.83 Bulletin 83/04

(45) Publication of the grant of the patent:
16.09.87 Bulletin 87/38

(84) Designated Contracting States:
BE DE FR GB IT NL

(56) References cited:
EP-A-0 022 344
EP-A-0 044 205
GB-A-2 006 242
GB-A-2 071 125
US-A-4 219 461
US-A-4 279 803
US-A-4 318 841
US-A-4 330 457

(73) Proprietor: CELANESE CORPORATION
1211 Avenue of the Americas
New York New York 10036 (US)

(72) Inventor: Ide, Yoshiaki
178 Sandford Avenue
North Plainfield New Jersey (US)

(74) Representative: De Minvielle-Devaux, Ian
Benedict Peter et al
CARPMAELS & RANSFORD 43, Bloomsbury
Square
London WC1A 2RA (GB)

EP 0 070 658 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to high performance foams of thermotropic liquid crystal polymers in the form of rigid foamed wholly aromatic polymers which are capable of forming an anisotropic melt phase and which comprise certain essential units. These foams have excellent properties which can be further improved by heat treatment in accordance with the present invention.

Foamed plastics are very useful in those applications where enhanced mechanical properties such as a high strength to weight ratio is desirable.

There are many applications for lightweight high performance foamed articles in transportation vehicles, building materials, industrial equipment and business machines, among others. However, no industry demands more lightweight, high performance products than the transportation industry. Particularly in the automobile industry, the principal applications involve structural elements as well as applications under the hood. The structural elements such as trunks, hoods and doors require high mechanical properties. The under-the-hood applications require excellent resistance to solvents as well as the ability to resist high temperatures.

However, when conventional isotropic polymers are foamed for use in such applications, the advantageous reduction in weight is unfortunately accompanied by a significant reduction in desirable mechanical properties such as tensile strength, impact strength and initial modulus. Thus, the range of applications of foamed conventional plastics is rather limited.

It is known in the art that unfoamed articles of liquid crystal polymers fabricated by conventional methods such as extrusion or injection moulding have very high anisotropy of physical properties between the machine direction (MD) and transverse direction (TD). This leads to very poor TD properties, although the MD properties are very suitable. In addition, such articles have very distinct skin-core morphology across the cross-section with the core being essentially unoriented.

It is also known that the highly aromatic liquid crystal polymers possess excellent high temperature stability and flame resistance as well as excellent solvent resistance and that foams of liquid crystal polymers may be provided. See U.S. Patents Nos. 3,778,410; 3,804,805; 3,859,251; 3,890,256; 4,238,600 and published PCT application No. W079/01030.

It is also known to those skilled in the art that the heat treatment of shaped articles of liquid crystal polymers increases its melting point, molecular weight and mechanical properties. See, for example, U.S. Patents Nos. 3,975,487; 4,183,895 and 4,247,514.

In accordance with a first aspect of the present invention there is provided a polymer foam comprising a rigid foamed wholly aromatic polymer which is capable of forming an anisotropic melt phase and which comprises not less than 10 mole percent of recurring units which include a 6-oxy-2-naphthoyl moiety, a 2,6-dioxynaphthalene moiety or a 2,6-dicarboxynaphthalene moiety, wherein at least some of the hydrogen atoms present upon the aromatic rings in the polymer may optionally be replaced independently by alkyl groups of 1 to 4 carbon atoms, alkoxy groups of 1 to 4 carbon atoms, halogen, phenyl groups or substituted phenyl groups. Examples of the said foams are set forth in the claims.

In accordance with a second aspect of the present invention, there is provided a method of producing a rigid foam of improved properties which comprises forming a foam according to the first aspect of the invention and subjecting said foam to a heat treatment sufficient to increase the melting temperature of the polymer by at least 10°C (degrees Celsius).

The invention also provides, in a third aspect, a foam which comprises a foam according to the first aspect of the invention which has been subjected to a heat treatment for a period of time and at a temperature sufficient to increase the melting temperature of the polymer by at least 10°C.

The foams of the invention have excellent thermal, flame and solvent stability and highly desirable mechanical properties; for example high strength.

Thermotropic liquid crystal polymers are polymers which are liquid crystalline (i.e. anisotropic) in the melt phase. These polymers have been described by various terms, including "liquid crystalline", "liquid crystal" and "anisotropic". Briefly, the polymers of this class are thought to involve a parallel ordering of the molecular chains. The state wherein the molecules are so ordered is often referred to either as the liquid crystal state or the nematic phase of the liquid crystalline material. These polymers are prepared from monomers which are generally long, flat and fairly rigid along the long axis of the molecule and commonly have chain-extending linkages that they are either coaxial or parallel.

Such polymers readily form liquid crystals (i.e. exhibit anisotropic properties) in the melt phase. Such properties may be confirmed by conventional polarised light techniques whereby crossed polarisers are utilised. More specifically, the anisotropic melt phase may be confirmed by the use of a Leitz polarising microscope at a magnification of 40× with the sample of a Leitz hot stage and under nitrogen atmosphere. The polymer is optically anisotropic; i.e. it transmits light when examined between crossed polarisers. Polarised light is transmitted when the sample is optically anisotropic even in the static state.

Those thermotropic liquid crystal polymers suitable for use in the present invention are wholly aromatic polymers which are capable of forming an anisotropic melt phase and which comprise not less than 10 mole percent of recurring units which include a 6-oxy-2-naphthoyl, 2,6-dioxynaphthalene or 2,6-dicarboxynaphthalene moiety. The wholly aromatic polyesters and wholly aromatic poly(ester-amide)s are

considered to be "wholly" aromatic in the sense that each moiety present in the polymer contributes at least one aromatic ring to the polymer backbone.

Examples of wholly aromatic polyesters which can be used in the present invention and which satisfy the above characteristics are disclosed in the following publications: US—A—4 161 470 (equivalent to GB—A—2 006 242); US—A—4 219 461; US—A—4 256 624 (equivalent to EP—A—0 022 344); US—A—4 299 756; US—A—4 279 803; US—A—4 337 190 (equivalent to EP—A—0 044 205); US—A—4 318 841; and GB—A—2 071 125.

Exemplary wholly aromatic poly(ester-amide)s are disclosed in US—A—4 330 457. The wholly aromatic polyester and poly(ester-amide)s disclosed therein typically are capable of forming an anisotropic melt phase at a temperature below approximately 400°, and preferably below approximately 350°C.

The thermotropic liquid crystal polymer may be further comprised of additional moieties which contribute at least one aromatic ring to the polymer backbone and which enable the polymer to exhibit anisotropic properties in the melt phase. Such moieties include but are not limited to aromatic diols, aromatic amines, aromatic diacids and aromatic hydroxy acids such as:

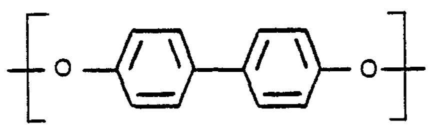 ,

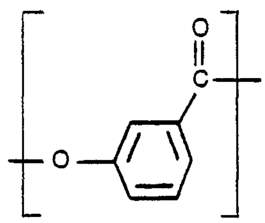 ,

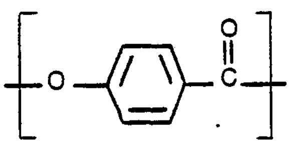 ,

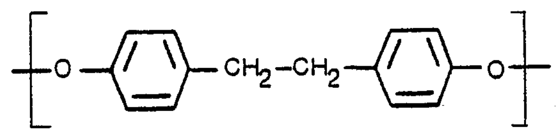 ,

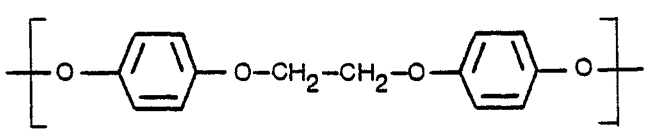 ,

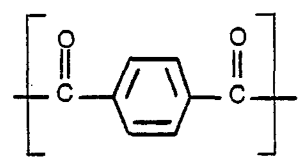 ,

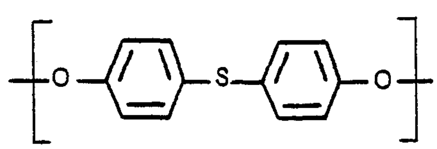 ,

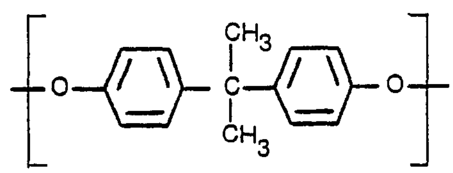 ,

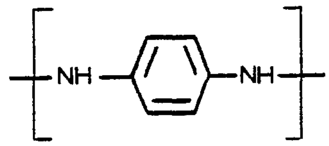 ,

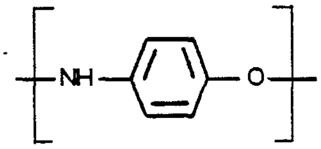 .

The respective moieties may be present in the various proportions. As previously noted, the polymer comprise at least 10 mole percent of recurring units which include a naphthalene moiety, preferably between 10 to 90 mole percent, and more preferably, at least 20 mole percent.

The wholly aromatic polymers including wholly aromatic polyester and poly(ester-amide)s which are suitable for use in the present invention may be formed by a variety of ester forming techniques whereby organic monomer compounds possessing functional groups which, upon condensation, form the requisite recurring moieties are reacted. For instance, the functional groups of the organic monomer compounds may be carboxylic acid groups, hydroxyl groups, ester groups, acyloxy groups, acid halides, amine groups,

etc. The organic monomer compounds may be reacted in the absence of a heat exchange fluid via a melt acidolysis procedure. They, accordingly, may be heated initially to form a melt solution of the reactants with the reaction continuing as said polymer particles are suspended therein. A vacuum may be applied to facilitate removal of volatiles (e.g. acetic acid or water) formed during the final stage of the condensation.

U.S. Patent No. 4,083,829, entitled "Melt Processable Thermotropic Wholly Aromatic Polyester", describes a slurry polymerisation process which may be employed to form wholly aromatic polyesters for use in the present invention. According to such a process, the solid product is suspended in a heat exchange medium.

When employing either the melt acidolysis procedure or the slurry procedure of U.S. Patent No. 4,083,829, the organic monomer reactants from which the wholly aromatic polyesters are derived may be initially provided in a modified form whereby the usual hydroxy groups of such monomers are esterified (i.e. they are provided as lower acyl esters). The lower acyl groups preferably have from two to four carbon atoms. Preferably, the acetate esters of organic monomer reactants are provided.

Representative catalysts which may be optionally employed in either the melt acidolysis procedure or in the slurry procedure of U.S. Patent No. 4,083,829 include dialkyl tin oxide (e.g. dibutyl tin oxide), diaryl tin oxide, titanium dioxide, antimony trioxide, alkoxy titanium silicates, titanium alkoxides, alkali and alkaline earth metal salts of carboxylic acids (e.g. zinc acetate), the gaseous acid catalysts such as Lewis acids (e.g. $BF_3$), hydrogen halides (e.g. HCl), etc. The quantity of catalyst utilised typically is 0.001 to 1 percent by weight based upon the total monomer weight, and most commonly 0.01 to 0.2 percent by weight.

The wholly aromatic polymers suitable for use in the present invention tend to be substantially insoluble in common solvents and accordingly are not susceptible to solution processing. As discussed previously, they can be readily processed by common melt processing techniques. Most suitable wholly aromatic polymers are soluble to a small degree (e.g. less than 1 percent by weight) in pentafluorophenol.

The wholly aromatic polyesters which are preferred for use in the present invention commonly exhibit a weight average molecular weight of 2,000 to 200,000, and preferably 10,000 to 50,000, and most preferably 20,000 to 25,000. The wholly aromatic poly(ester-amide)s which are preferred commonly exhibit a molecular weight of 5000 to 50,000 and preferably 10,000 to 30,000; e.g. 15,000 to 17,000. Such molecular weight may be determined by gel permeation chromatography as well as by other standard techniques not involving the solutioning of the polymer, e.g. by end group determination via infrared spectroscopy on compression moulded films. Alternatively, light scattering techniques in a pentafluorophenol solution may be employed to determine the molecular weight.

The wholly aromatic polyesters and poly(ester-amide)s additionally commonly exhibit an inherent viscosity (i.e. I.V.) of at least 2.0 dl/g, e.g. 2.0 to 10.0 dl/g, when dissolved in a concentration of 0.1 per cent by weight in pentaflurophenol at 60°C.

Especially preferred wholly aromatic polymers are those which are disclosed in U.S. Patents 4,161,470, 4,184,996 and 4,256,624.

For the purposes of the present invention, the aromatic rings which are included in the polymer backbones of the polymer components may include substitution of at least some of the hydrogen atoms present upon an aromatic ring. Such substituents include alkyl groups of up to four carbon atoms; alkoxy groups having up to four carbon atoms; halogens and additional aromatic rings, such as phenyl and substituted phenyl. Preferred halogens include fluorine, chlorine and bromine.

The foams of the present invention can be formed in any suitable conventional manner such as by extrusion and injection moulding. For example, a foam may be formed by screw extrusion by admixing pellets of a thermotropic liquid crystal polymer with a powdered blowing agent and extruding the admixture through an appropriate orifice (e.g. a slit, a die) at a temperature greater than the melting temperature of the polymer. The blowing agent decomposes at the temperature of extrusion to release a gas such as nitrogen or carbon dioxide within the extruded polymer melt to form the foam. The extruded foamed polymer is quenched or cooled by appropriate means such as by forced air.

The particular extrusion apparatus used is not critical and any suitable apparatus may be used herein. Examples of suitable extrusion apparatus are described in *Plastics Engineering Handbook of the Society of the Plastics Industry, Inc.,* Fourth Edition, edited by Joel Frados, Van Nostrand Reinhold Company (1976), pages 156—203.

The conditions of temperature and pressure under which the liquid crystal polymer can be extruded are not critical to the process of the present invention and can easily be determined by one of ordinary skill in the art. Typically, foamed thermotropic liquid crystal polymers can be extruded at a temperate within the range 250°C to 350°C (depending upon the melting temperature of the polymer) and at a presure within the range of 0.69 to 34.5 MPa (100 p.s.i. to 5,000 p.s.i.).

The thermotropic liquid crystal polymers typically exhibit a density of 0.1 to 1.0 g/cm$^3$ upon being foamed. Preferably, the density of the foamed polymer ranges from 0.3 to 0.7 g/cm$^3$. In addition, the melting point of the foamed thermotropic liquid crystal polymer generally ranges from 250°C to 320°C depending upon the specific polymer employed.

The foamed liquid crystal polymers can be extruded to form variety of structural articles. For example, the liquid crystal polymer can be extruded through a die to form a sheet. It is to be understood that the term "sheet" as used herein includes any of various relatively thin, substantially flat structures which may be known in the art as sheets or slabs, etc. The liquid crystal polymer can also be extruded through a suitable

die to form a rod or tube (e.g. a pipe).

The foamed thermotropic liquid crystal polymers can also be employed to form moulded structural articles such as by screw injection moulding. An admixture of the blowing agent and the pelleted polymer are placed in the hopper of a screw injection moulding apparatus wherein the admixture is heated to above the melting temperature of the polymer and injected into a suitable mould kept at a temperature substantially below the melting temperature of the polymer. The polymer is thereafter allowed to cool and is separated from the mould. The conditions of temperature and pressure under which the liquid crystal polymer can be moulded are not critical and can easily be determined by one of ordinary skill in the art.

Conventional high temperature blowing agents can be employed to produce the foamed polymers. For example, suitable blowing agents include but are not limited to those marketed commercially under the trade names Expandex 5 PT (comprised of 5-phenyltetrazole and marketed by Stepan Chemical Co.), Ficel THT (comprised of trihydrazine triazine and marketed by Fisons Industrial Chemicals), Celogen HT 550 (comprised of a hydrazine derivative and marketed by Uniroyal Chemical) and Kemtec 500 (marketed by Sherwin-Williams Chemicals). Such blowing agents generally decompose at a temperature within the range of 240 to 310°C.

The decomposition of the blowing agent is a function of temperature as well as time. It is important to match the decomposition temperature with the processing temperature of the polymer. If the blowing agent decomposes before the polymer melts sufficiently, poor cell structure may be attained as well as an unsatisfactory surface appearance. The amount of blowing agent required generally ranges from 0.1 percent by weight to several percent depending upon the gas yield of the blowing agent and the desired density reduction. Preferably, the concentration of the blowing agent will range from 0.2 to 0.5 percent by weight.

In addition, with the proper selection of chemical blowing agent, the foaming action can be controlled by controlling the temperature and/or the pressure. Control of the foaming action by temperature is more reliable than pressure and the use of a chemical blowing agent is thus preferred.

It is also possible that a suitable gas could be blown into the polymer melt to provide the foamed polymer. However, it is more difficult to ensure adequate dispersion of the gas by such a method.

Various fillers and reinforcing agents may also be employed to enhance various characteristics of the foamed polymer. For example, suitable reinforcing agents such as glass fibres may be employed to provide reinforcement for the foam. Such reinforcing agents generally may be employed in an amount up to 50 percent by weight and preferably from 10 to 50 percent by weight based on the weight of the foam. In addition, fillers such as pigments, antioxidants and nucleating agents may be added. The amount of such fillers which are generally employed ranges from 0.2 to 10 percent by weight and preferably ranges from 0.5 to 2 percent by weight.

The foams of the present invention exhibit enhanced mechanical properties due to the orientation of the polymer molecules and the effect of heat treatment. Specifically, the foams exhibit a reduced directional anisotropy in comparison to the unfoamed polymer. Foams having such a reduced directional anisotropy are self-reinforcing and have mechanical properties comparable to those of fibre-reinforced polymeric materials. The orientation of the polymer molecules around the closed cell bubbles is caused by the biaxial elongational flow field of expanding bubbles during the foaming process. The rod-like molecules of liquid crystal polymers can be easily oriented by such a flow field and the biaxial orientation can be retained.

As a result of this reduced directional anisotropy, the foams exhibit enhanced mechanical properties relative to the weight of the foam measured in the transverse direction (TD) in relation to the mechanical properties measured in the machine direction (MD).

The foams of the present invention also exhibit high flame and thermal stability and excellent solvent and chemical resistance as a result of the properties of the polymer employed therein. The polymers employed in the foams of the present invention also exhibit sufficiently high melting temperatures (e.g. above 250°C) for the foam to be more amenable to heat treatment as discussed below. The foams of the present invention also carbonise upon being heated to sufficiently high temperatures which enhances the flame resistance of the foam.

The mechanical properties of foams produced in accordance with the present invention can be improved still further by subjecting the foams to a heat treatment following formation thereof. The heat treatment improves the properties of the foam by increasing the molecular weight of the liquid crystalline polymer and increasing the degree of crystallinity thereof while also increasing the melting temperature of the polymer.

The foams may be thermally treated in an inert atmosphere (e.g. nitrogen, carbon dioxide, argon, helium) or alternatively, in a flowing oxygen-containing atmosphere (e.g. air). The use of non-oxidising atmosphere is preferred to avoid the possibility of thermal degradation. The foam may be brought to a temperature 10 to 13°C (degrees Celsius) below the melting temperature of the foamed liquid crystal polymer, at which temperature the foam remains a solid object. It is preferable for the temperature of the heat treatment to be as high as possible without equalling or exceeding the melting temperature of the polymer. It is most preferable to increase the temperature of heat treatment gradually in accordance with the increase of the melting temperature of the polymer during heat treatment.

The duration of the heat treatment will commonly range from a few minutes to a number of days, e.g.

from 0.5 to 200 hours, or more. Preferably, the heat treatment is conducted for a time of 1 to 48 hours and typically from 5 to 30 hours.

Generally, the duration of heat treatment varies, depending upon the heat treatment temperature; that is, a shorter treatment time is required as a higher treatment temperature is used. Thus, the duration of the heat treatment can be shortened for higher melting polymers, since higher heat treatment temperatures can be applied without melting the polymer.

The heat treatment is conducted under conditions such as to increase the melting temperature of the polymer by at least 10°C. Preferably, the melting temperature of the foamed liquid crystal polymer is increased from 20 to 50°C (degrees Celsius) as a result of the heat treatment. The amount of increase which is obtained is dependent upon the temperature used in the heat treatment, with higher heat treatment temperatures giving greater increases. It should be noted at this time that reference herein to a temperature below which a specific polymer may exhibit anisotropic properties in the melt phase is intended to refer to the temperature below which the polymer exhibits such properties prior to heat treatment thereof.

It has also been found that, while the heat treatment of non-foamed liquid crystal polymers increases the molecular weight of the polymer and the melting temperature thereof, a greater increase in the melting temperature and molecular weight of the polymer can be obtained if the polymer is foamed prior to such heat treatment.

Such increase is evidenced by a higher melting temperature in the core of the foam, with the foam basically being comprised of a skin and a core. The skin of the foam is a thin layer (e.g. a few tens of µm (mils) thick) consisting of the polymer which possesses a significantly greater density than that exhibited by the core. The core comprises substantially the entire volume of the foam (except for the skin) and is of much lower density than the skin. The skin is produced during the extrusion of an injection moulding process as a result of the flow pattern of the foamed polymer and the influence of shear forces, etc. The thickness of the skin is also related to cooling rates and injection speed, with higher cooling rates and lower injection moulding speeds providing a thicker skin.

It is believed that the foamed liquid crystal polymers have higher levels of local orientation around the bubbles which facilitates further polymerisation reaction between chain ends. In addition, by-products of such reaction can diffuse out more easily through the foam.

In addition, the fact that further polymerisation is facilitated results in the production of a foamed polymer which exhibits more balanced mechanical properties (i.e. the difference between the tensile strength (TD) and the tensile strength (MD) is reduced) such that the foam is, in effect, proportionally stronger in the transverse direction.

The chemical resistance also increases with heat treatment and the solubility into pentafluorophenol, one of the rare solvents for thermotropic liquid crystal polymers, continuously decreases with increasing heat treatment time and eventually the material does not dissolve even minimally (such as in amounts of 0.1 percent by weight). Accordingly, reference herein to solvation of the thermotropic liquid crystal polymers is intended to refer to such solvation prior to heat treatment of the foam.

The invention is additionally illustrated in connection with the following Examples which are to be considered as illustrative of the present invention. It should be understood, however, that the invention is not limited to the specific details of the Examples.

### Example 1

Pellets of a thermotropic liquid crystal polymer comprised of 40 mole percent of p-oxybenzoyl units and 60 mole percent of 6-oxy-2-naphthoyl units of inherent viscosity 6.0 are admixed with 10 percent by weight of glass fibres as well as various amounts of powdered Expandex 5—PT blowing agent and injection moulded at a temperature of 280°C into a mould which is at a temperature of 21°C to form sample bars. The various sample bars produced by the moulding process are examined to determine the tensile, flexural and impact properties of the bars. The tensile properties are determined in accordance with standard test ASTM D638, the flexural properties are determined in accordance with ASTM D790 and the impact properties are determined in accordance with ASTM D256. Samples 1—5 and Samples 6—10 are formed in moulds of differing size, which accounts for the variation in density reduction attained for the two groups of samples. The results of the examinations are set forth in Tables I and II.

TABLE I
Tensile Properties of Injection Moulded Polymer (10% Glass)

| Sample | Blowing Agent Concentration Wt% | Density g/cm$^3$ | Tensile Strength $10^3$psi (MPa) | Elongation (%) | Initial Modulus $10^6$psi (GPa) |
|---|---|---|---|---|---|
| 1 | None (unfoamed) | 1.51 | 23.1 (159.3) | 3.21 | 1.49 (10.3) |
| 2 | 0.2 | 1.18 | 18.0 (124.1) | 2.64 | 1.25 ( 8.6) |
| 3 | 0.5 | 1.16 | 15.0 (103.4) | 1.80 | 1.25 ( 8.6) |
| 4 | 1.0 | 1.20 | 17.5 (120.7) | 2.34 | 1.27 ( 8.8) |
| 5 | 2.0 | 1.17 | 16.0 (110.3) | 1.98 | 1.25 ( 8.6) |

TABLE II
Flexural and Impact Properties of Injection Moulded Polymers (10% Glass)

| Sample | Blowing Agent Concentration Wt% | Density g/cm$^3$ | Flexural Strength $10^3$psi (MPa) | Flexural Modulus $10^6$psi (GPa) | Izod Impact ft-lb/in (Nmm) |
|---|---|---|---|---|---|
| 6 | None (unfoamed) | 1.51 | 29.1 (200.1) | 1.52 (10.5) | 2.03 (0.36) |
| 7 | 0.2 | 1.41 | 23.4 (161.3) | 1.16 ( 8.0) | 1.71 (0.30) |
| 8 | 0.5 | 1.37 | 23.2 (160.0) | 1.19 ( 8.2) | 1.26 (0.22) |
| 9 | 1.0 | 1.37 | 22.1 (152.4) | 1.19 ( 8.2) | 1.08 (0.19) |
| 10 | 2.0 | 1.36 | 22.5 (155.1) | 1.20 ( 8.3) | 1.08 (0.19) |

As shown by Example 1, structural articles comprised of foamed wholly aromatic thermotropic liquid crystal polymers of the present invention may exhibit a significantly reduced density compared with unfoamed polymers. However, the tensile, flexural and impact properties of the articles comprised of the foamed polymers are of sufficient magnitude to enable the structural articles to be employed successfully.

Example 2

Pellets of a thermotropic liquid crystal polymer comprised of 25 mole percent of 6-oxy-2-naphthoyl units and 75 mole percent of p-oxybenzoyl units of inherent viscosity 9.9 are admixed with 0.2 percent by weight of a powdered Kemtec 500 blowing agent and 1.0 percent by weight of talc (a nucleating agent). The admixture is extruded at 307°C from a sheet die of dimensions 10.15 cm × 1.65 mm and taken up at 0.37 meters/minutes. A Koch static mixture is used just prior to extrusion of the admixture through the die to ensure uniform admixture of the blowing agent and the melt.

Sample bars are cut from the extruded foamed sheet and examined to determine their tensile properties in both the machine (MD) and transverse (TD) directions according to ASTM D638, Type V. Unfoamed sheets of comparable dimensions of the same polymer produced by the same method are also examined to determine their tensile properties. The average density of the foamed sheets is 0.77 g/cm$^3$ while the average density of the unfoamed sheets is 1.4 g/cm$^3$. The tensile properties of five bars of both foamed and unfoamed samples are determined and averaged to yield composite values which are set forth in Tables III and IV.

TABLE III
Tensile Properties of Unfoamed Extruded Polymer of Example 2

| Tensile Properties (MD) | | | Tensile Properties (TD) | | |
|---|---|---|---|---|---|
| Tensile Strength $10^3$psi (MPa) | Elongation % | Initial Modulus $10^6$psi (GPa) | Tensile Strength $10^3$psi (MPa) | Elongation % | Initial Modulus $10^6$psi (GPa) |
| 28.2 (194.4) | 1.90 | 2.07 (14.3) | 10.5 (72.4) | 11.5 | 0.420 (2.9) |

TABLE IV
Tensile Properties of Foamed Polymer of Example 2

| Tensile Properties (MD) | | | Tensile Properties (TD) | | |
|---|---|---|---|---|---|
| Tensile Strength $10^3$psi (MPa) | Elongation % | Initial Modulus $10^6$psi (GPa) | Tensile Strength $10^3$psi (MPa) | Elongation % | Initial Modulus $10^6$psi (GPa) |
| 5.00[a] (34.5) | 2.28 | 0.398 (2.7) | 4.65 (32.1) | 6.49 | 0.261 (1.8) |
| 9.33[b] (64.3) | 2.28 | 0.743 (5.1) | 8.68 (69.8) | 6.49 | 0.487 (3.4) |

In Table IV,
[a] = as extruded
[b] = corrected to a density of 1.4 g/cm$^3$ (i.e. average density of unfoamed samples)

Example 2 demonstrates that the foams of the present invention also exhibit enhanced mechanical properties (relative to the weight of the foam) in the transverse direction (TD) in relation to the mechanical properties measured in the machine direction (MD). For example, when corrected for density reduction, the tensile strength of the foamed polymer measured in the transverse direction substantially equals the corresponding value for the unfoamed sheet (8.68 vs. 10.50) while the initial modulus exceeds the corresponding value for the unfoamed sheet (0.487 vs. 0.420).

In addition, the tensile properties (TD) decrease proportionally less than do the tensile properties (MD) for the foamed polymer in comparison to the corresponding tensile properties for the unfoamed polymer. Thus, the foamed polymer, while its tensile properties are reduced as a result of being foamed, is actually proportionally stronger in the transverse direction (TD) in comparison to the machine direction (MD) as a result of the foaming. In effect, the tensile properties become more multi-dimensional (i.e. exhibits a more balanced anisotropy) which permits the foamed polymer to be employed in applications where multi-direction tensile strength is desirable.

Example 3

Pellets of a thermotropic liquid crystal polymer comprised of 60 mole percent of p-oxybenzoyl units, 20 mole percent of 2,6-dioxynaphthalene units and 20 mole percent of terephthaloyl units and having an inherent viscosity of 5.4 ar screw extruded at 300°C through a 4 inch (10.2 cm) Killion die to provide several foamed and unfoamed sheet samples. A Ficel THT powdered blowing agent (0.5 percent by weight) admixed with 0.1 percent by weight of mineral oil is used to form the foamed samples by admixture with the pellets prior to extrusion. The density of the unfoamed samples is 1.4 g/cm$^3$ based on the average of five samples. The density of the foamed samples is reduced to 0.58 g/cm$^3$ which constitutes a 59 percent weight reduction. All samples exhibit a melting temperature of 295°C. Certain of the samples are heat treated at 280°C for 24 hours followed by additional heat treatment at 310°C for 24 hours whereupon the melting temperature is increased to 341°C. All samples are examined to determine their tensile properties along both the machine (MD) and transverse (TD) directions subsequent to extrusion and heat treatment according to ASTM D638, Type V. The results of such examination are set forth in Tables V and VI.

TABLE V
Tensile Properties of Extruded Unfoamed Example 3 Sheets

| | Tensile Properties (MD) | | | Tensile Properties (TD) | | |
|---|---|---|---|---|---|---|
| Samples | Tensile Strength $10^3$psi (MPa) | Elongation % | Initial Modulus $10^6$psi (GPa) | Tensile Strength $10^3$psi (MPa) | Elongation % | Initial Modulus $10^6$psi (GPa) |
| 1 (As extruded) | 38.9 (268.1) | 1.07 | 4.19 (28.9) | 7.94 ( 54.7) | 5.61 | 0.450 (3.1) |
| 2 (After heat treatment) | 74.1 (510.9) | 2.04 | 3.64 (25.1) | 8.94 ( 61.6) | 7.26 | 0.438 (3.0) |
| 3 (As extruded) | 34.2 (235.8) | 1.07 | 3.76 (25.9) | 7.94 ( 54.7) | 3.31 | 0.528 (3.6) |
| 4 (After heat treatment) | 85.3 (588.1) | 2.16 | 3.88 (26.8) | 11.2 (125.4) | 5.21 | 0.629 (4.3) |
| 5 (As extruded) | 38.7 (266.8) | 1.20 | 4.15 (28.6) | 7.81 ( 53.8) | 3.98 | 0.441 (3.0) |
| 6 (After heat treatment) | 73.5 (506.8) | 1.83 | 4.47 (30.8) | 5.29 ( 36.5) | 10.4 | 0.279 (1.9) |

TABLE VI
Tensile Properties of Extruded Foamed Example 3 Sheets

| | Tensile Properties (MD) | | | Tensile Properties (TD) | | |
|---|---|---|---|---|---|---|
| Sample | Tensile Strength $10^3$psi (MPa) | Elongation % | Initial Modulus $10^6$psi (GPa) | Tensile Strength $10^3$psi (MPa) | Elongation % | Initial Modulus $10^6$psi (GPa) |
| 7 (As extruded) | 7.60 (52.4) | 1.59 | 0.747 ( 5.15) | 4.82 (33.2) | 2.45 | 0.446 (3.1) |
| 7a | 18.3 (126.2) | 1.59 | 1.80 (12.4) | 11.6 (80.0) | 2.45 | 1.07 (7.4) |
| 8 (After heat treatment) | 14.7 (101.3) | 2.60 | 0.860 ( 5.9) | 7.46 (51.4) | 3.48 | 0.499 (3.4) |
| 8a | 35.4 (244.1) | 2.60 | 2.07 (14.3) | 17.9 (123.4) | 3.48 | 1.20 (8.3) |

In Table VI, samples 7a and 8a represent samples 7 and 8 corrected to a density of 1.4 g/$cm^3$ (i.e density of unfoamed samples).

As shown in Example 3, heat treatment of the thermotropic liquid crystal polymer foam provides distinct advantages. Specifically, the tensile strength, elongation and initial modulus exhibited by the foam polymer are all increased significantly as a result of the heat treatment.

Example 3 also demonstrates that the heat treated foams of the present invention exhibit enhanced mechanical properties (relative to the weight of the foam) in the transverse direction (TD) in relation to the mechanical properties measured in the machine direction. For example, when corrected for density reduction, the tensile strength (TD) of the foamed polymer exceeds the tensile strength (TD) of the unfoamed polymers. More importantly, while the unfoamed polymers exhibit minor increases in tensile strength (TD) upon being heat treated, the foamed polymer exhibits a dramatic 65 percent increase in tensile strength (TD) upon being heat treated. Such a result renders such heat treated foamed polymers highly desirable in structural applications where low weight requirements exist since desirable tensile properties in both the transverse and machine direction can still be provided.

Example 4

The thermotropic liquid crystal polymer of Example 3 is admixed with 0.2 weight percent of a blowing agent denoted as Kemtec 500 and 1 weight percent of the inorganic filler wollastonite (a nucleating agent).

The admixture is screw extruded through a sheet die to provide both foamed and unfoamed sheet samples. The density of the foamed sample is 0.61 g/cm$^3$. Certain of the samples are also heat treated with the temperature programmed to increase continuously. Specifically, after the samples are dried at 130°C for 12 hours, the temperature is increased to 260°C over 4 hours and then to 310°C over 20 hours. Melting behaviours of the samples at the skin and at the core are measured by a differential scanning calorimeter subsequent to extrusion and heat treatment. The melting peak before heat treatment is 295°C for both unfoamed and foamed samples regardless of skin or core. The increase of the melting point after heat treatment differs as set forth in Table VII belows:

TABLE VII
Melting Peaks of the Skin and Core after Heat Treatment.

| | Unfoamed | Foamed |
|---|---|---|
| Skin | 330°C | 328°C |
| Core | 321°C | 327°C |

One of the most striking advantages which is attained by heat treatment of the foams of the present invention is demonstrated by Example 4 and shown by the data in Table VII. The effect of the heat treatment depends on molecular orientation; i.e. the more oriented, the greater the effect. As shown in Table VII, the melting temperature increase of the core after heat treatment is greater for the foamed than for the unfoamed articles. This indicates that the orientation of the foam is rather uniform throughout the cross-section and the level of orientation is very high and very close to that of the unfoamed skin.

While the skin of the unfoamed polymer exhibits a greater melting peak increase than does the skin of the foamed polymer, the lower increase in the melting peak of the foamed skin is not a disadvantage due to the fact that the skin volume comprises a relatively small proportion of the total foam value.

Example 5

Pellets of a thermotropic liquid crystal polymer comprised of 75 mole percent of p-oxybenzoyl moieties and 25 mole percent of 6-oxy-2-naphthoyl moieties and having an inherent viscosity of 9.9 are screw extruded through a 4 inch (10.2 cm) Killion die to provide both foamed and unfoamed sheet samples. A Celogen HT 550 (0.1 percent by weight) and Kemtee 500 (0.2 percent by weight) blowing agent are used to form the foamed samples by admixture with the pellets prior to extrusion. All samples (foamed and unfoamed) exhibit a melting temperature of 301°C.

Both foamed and unfoamed samples are subjected to heat treatment wherein the temperature is increased from 130°C to 260°C over a one-hour period and then increased to 310°C over an eleven-hour period. The melting temperature of the skin and core of the foamed and unfoamed samples are measured with the results tabulated in Table VIII.

TABLE VIII
Melting Temperatures of Foamed and Unfoamed Heat Treated Sheets of Example 5

| Sample | Skin | Core |
|---|---|---|
| 1 (Unfoamed) | 334°C | 332°C |
| 2 (Unfoamed) | 338°C | 334°C |
| 3 (Foamed)[a] | 342°C | 342°C |
| 4 (Foamed)[b] | 341°C | 338°C |

In Table VIII,
[a] = 0.1 percent Celogen HT550, foam density = 0.52 g/cm$^3$
[b] = 0.2 percent Kemtec 500, foam density = 0.75 g/cm$^3$

As indicated previously in Example 4, the melting temperature of the core of the foamed sheets can be increased to a greater extent than is the melting temperature of the core of the unfoamed sheets, thus demonstrating that the foamed polymer is more amenable to heat treatment than the unfoamed polymer.

The principles, preferred embodiments and modes of operation of the present invention have been described in the foregoing specification. The invention which is intended to be protected herein, however, is not to be construed as limited to the particular forms disclosed, since these are to be regarded as illustrative rather than restrictive.

**Claims**

1. A polymer foam comprising a rigid foamed wholly aromatic polymer which is capable of forming an anisotropic melt phase and which comprises not less than 10 mole percent of recurring units which include a 6-oxy-2-naphthoyl moiety, a 2,6-dioxynaphthalene moiety or a 2,6-dicarboxynaphthalene moiety wherein at least some of the hydrogen atoms present upon the aromatic rings in the polymer may optionally be replaced independently by alkly groups of 1 to 4 carbon atoms, alkoxy groups of 1 to 4 carbon atoms, halogen, phenyl groups or substituted phenyl groups.

2. The foam of claim 1, wherein the naphthalene moiety is a 6-oxy-2-naphthoyl moiety.

3. The foam of claim 1 or claim 2, wherein said wholly aromatic polymer exhibits an inherent viscosity of at least 2.0 dl/g when dissolved in a concentration of 0.1 percent by weight in pentafluorophenol at 60°C.

4. The foam of claim 3, wherein said wholly aromatic polymer exhibits an inherent viscosity of 2.0 to 10.0 dl/g when dissolved in a concentration of 0.1 percent by weight in pentafluorophenol at 60°C.

5. The foam of any one of claims 1 to 4, wherein said wholly aromatic polymer is capable of forming an anisotropic melt phase at a temperature below 400°C.

6. The foam of any one of claims 1 to 5, wherein said naphthalene moiety is present in an amount of at least 20 mole percent.

7. The foam of any one of claims 1 to 6, which has a density of from 0.1 to 1.0 g/cm$^3$.

8. The foam of claim 7, which has a density of 0.3 to 0.7 g/cm$^3$.

9. The foam of any one of claims 1 to 8, wherein said wholly aromatic polymer is a wholly aromatic polyester or a wholly aromatic poly (ester-amide).

10. The foam of claim 9, wherein said wholy aromatic polymer comprises a melt processable wholly aromatic polyester which consists essentially of the recurring moieties I and II wherein:

I is 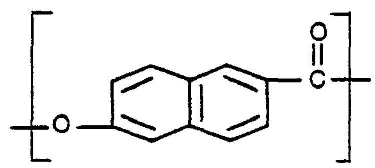 , and

II is 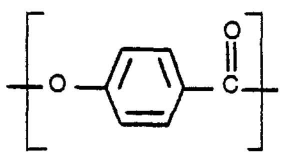

the polyester comprising 10 to 90 mole percent of moiety 1 and 10 to 90 mole percent of moiety II.

11. The foam of claim 10, wherein the polyester comprises 65 to 85 mole percent of moiety II.

12. The foam of claim 10, wherein the polyester comprises 15 to 35 mole percent of moiety II.

13. The foam of claim 9, wherein said wholly aromatic polymer comprises a melt processable wholly aromatic polyester which consists essentially of the recurring moieties I, II, III and IV wherein:

I is 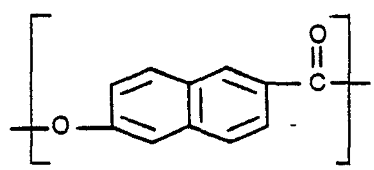 , and

II is 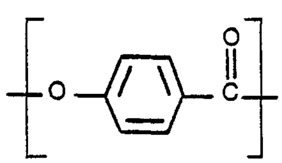

III is a dioxyaryl moiety of the formula $-[O-Ar-O]-$ where Ar is a divalent radical comprising at least one aromatic ring, and

IV is a dicarboxy aryl moiety of the formula 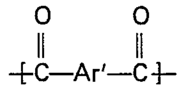

wherein Ar′ is a divalent radical comprising at least one aromatic ring, the polyester comprising 20 to 40 mole percent of moiety I, in excess of 10 up to 50 mole percent of moiety II, in excess of 5 up to 30 mole percent of moiety III and in excess of 5 up to 30 mole percent of moiety IV.

14. The foam of claim 13, wherein the polyester comprises 20 to 30 mole percent of moiety I, 25 to 40 mole percent of moiety II, 15 to 25 mole percent of moiety III and 15 to 25 mole percent of moiety IV.

15. The foam of claim 9, wherein said wholly aromatic polymer comprises a melt processable wholly aromatic polyester which consists essentially of the recurring moieties I, II and III wherein:

I is 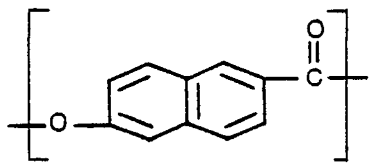

II is a dioxy aryl moiety of the formula -[O—Ar—O]- where Ar is a divalent radical comprising at least one aromatic ring, and

III is a dicarboxy aryl moiety of the formula 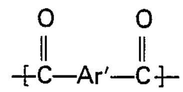

where Ar′ is a divalent radical comprising at least one aromatic ring, the polyester comprising 10 to 90 mole percent of moiety I, 5 to 45 mole percent of moiety II and 5 to 45 mole percent of moiety III.

16. The foam of claim 15, wherein the polyester comprises 20 to 80 mole percent of moiety I, 10 to 40 mole percent of moiety II and 10 to 40 mole percent of moiety III.

17. The foam of claim 9, wherein said wholly aromatic polymer comprises a melt processable wholly aromatic polyester which consists essentially of the recurring moieties I and II wherein:

I is 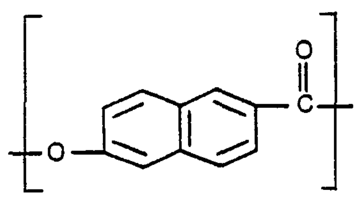 and

II is 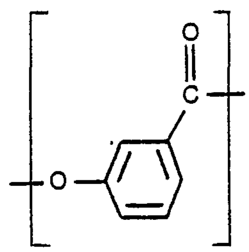 ,

the polyester comprising 10 to 90 mole percent of moiety I and 10 to 90 mole percent of moiety II.

18. The foam of claim 17, wherein the polyester comprises 50 to 80 mole percent of moiety I and 20 to 50 mole percent of moiety II.

19. The foam of claim 9, wherein said wholly aromatic polymer comprises a melt processable wholly aromatic polyester which consists essentially of the recurring moieties I, II, III and IV wherein:

I is 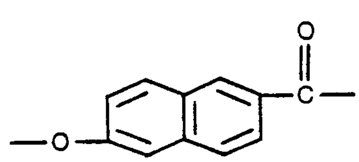 ,

II is 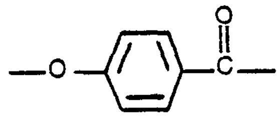 ,

III is 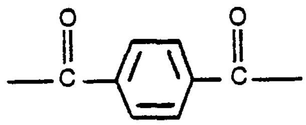 , and

IV is 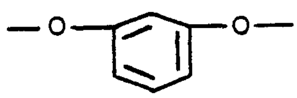 ,

the polyester comprising 10 to 60 mole percent of moiety I, 5 to 70 mole percent of moiety II, 10 to 45 mole percent of moiety III and 10 to 45 mole percent of moiety IV, provided that there are no phenyl or substituted phenyl rings on either of moieties I and II.

20. The foam of claim 19, wherein the polyester comprises 15 to 25 mole percent of moiety I, 25 to 35 mole percent of moiety II, 20 to 30 mole percent of moiety III and 20 to 30 mole percent of moiety IV.

21. The foam of claim 9, wherein said wholly aromatic polymer comprises a wholly aromatic poly(ester-amide) which consists essentially of the recurring moieties I, II, III and (optionally) IV wherein:

I is 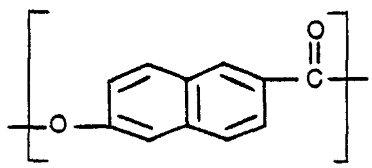 ,

II is 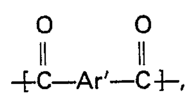,

where A is a divalent radical comprising at least one aromatic ring;

III is –[Y—Ar—Z]–, where Ar is a divalent radical comprising at least one aromatic ring, Y is O, NH, or NR, and Z is NH or NR, where R is an alkyl group of 1 to 6 carbon atoms or an aryl group; and

IV is –[O—Ar′—O]–, where Ar′ is a divalent radical comprising at least one aromatic ring; wherein the said poly(ester-amide) comprises 10 to 90 mole percent of moiety I, 5 to 45 mole percent of moiety II, 5 to 45 percent of moiety III and 0 to 40 mole percent of moiety IV.

22. The foam of claim 9, wherein said wholly aromatic polymer comprises a melt processable wholly aromatic polyester which coonsists essentially of the recurring moieties I, II and III wherein:

I is 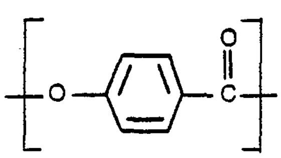

II is 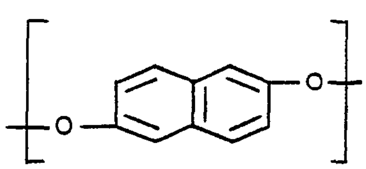

III is 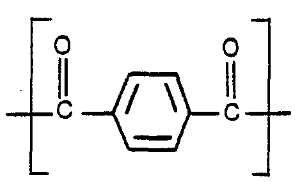 and

wherein said polyester comprises 30 to 70 mole percent of moiety I,

23. The foam of claim 22, wherein the polyester comprises 40 to 60 mole percent of moiety I, 20 to 30 mole percent of moiety II and 20 to 30 mole percent of moiety III.

24. The foam of any one of claims 1 to 23, which has been heat treated at a temperature below the melting temperature of the polymer for a period of time sufficient to increase the melting temperature of the polymer by at least 10°C.

25. A method of providing a foam according to claim 24, comprising providing a foam according to any one of claims 1 to 23, and subjecting said foam to a heat treatment at a temperature below the melting temperature of the polymer for a period of time sufficient to increase the melting temperature of the polymer by at least 10°C.

26. The method of claim 25, wherein the heat treatment is effected for a period of time and at a temperature sufficient to increase the melting temperature of the polymer by from 20° to 50°C.

27. The method of claim 25 to claim 26, wherein the heat treatment is affected at a temperature from 10° to 30°C below the melting temperature of the polymer.

28. The method of any one of claims 25 to 27, wherein said period of time is from 0.5 to 200 hours.

29. The method of claim 28, wherein said period of time is from 1 to 48 hours.

30. The method of claim 29, wherein said period of time is from 5 to 30 hours.

31. The method of any one of claims 25 to 30, wherein the heat treatment is effected in a non-oxidising atmosphere.

32. The method of claim 31, wherein the heat treatment is effected in a nitrogen atmosphere.

**Patentansprüche:**

1. Polymer-Schaumstoff aus einem steifen, geschäumten vollständig aromatischen Polymer, das zur Bildung einer anisotropen Schmelzphase befähigt ist und nicht weniger als 10 Mol-% wiederkehrender Einheiten umfaßt, die eine 6-Oxy-2-naphthoyl-Struktureinheit, eine 2,6-Dioxynaphthalin-Struktureinheit oder eine 2,6-Dicarboxynaphthalin-Struktureinheit enthalten, worin gegebenenfalls wenigstens einige der an den aromatischen Ringen in dem Polymer vorhandenen Wasserstoff-Atome unabhängig voneinander durch Alkyl-Gruppen mit 1 bis 4 Kohlenstoff-Atomen, Alkoxy-Gruppen mit 1 bis 4 Kohlenstoff-Atomen, Halogen, Phenyl-Gruppen oder substituierte Phenyl-Gruppen ersetzt sein können.

2. Schaumstoff nach Anspruch 1, dadurch gekennzeichnet, daß die Naphthalin-Struktureinheit eine 6-Oxy-2-naphthoyl-Struktureinheit ist.

3. Schaumstoff nach Anspruch 1 oder Anspruch 2, dadurch gekennzeichnet, daß das vollständig aromatische Polymer, gelöst in einer Konzentration von 0,1 Gew.-% in Pentafluorophenol bei 60°C, eine logarithmische Viskositätszahl von wenigstens 2,0 dl/g aufweist.

4. Schaumstoff nach Anspruch 3, dadurch gekennzeichnet, daß das vollständig aromatische Polymer, gelöst in einer Konzentration von 0,1 Gew.-% in Pentafluorophenol bei 60°C, eine logarithmische Viskositätszahl von 2,0 bis 10,0 dl/g aufweist.

5. Schaumstoff nach irgendeinem der Ansprüche 1 bis 4, dadurch gekennzeichnet, daß das vollständig aromatische Polymer zur Bildung einer anisotropen Schmelzphase bei einer Temperatur unterhalb von 400°C befähigt ist.

6. Schaumstoff nach irgendeinem der Ansprüche 1 bis 5, dadurch gekennzeichnet, daß die Naphthalin-Struktureinheit in einer Menge von wenigstens 20 Mol-% vorliegt.

7. Schaumstoff nach irgendeinem der Ansprüche 1 bis 6, dadurch gekennzeichnet, daß er eine Dichte von 0,1 bis 1,0 g/cm³ hat.

8. Schaumstoff nach Ansprüch 7, dadurch gekennzeichnet, daß er eine Dichte von 0,3 bis 0,7 g/cm³ hat.

9. Schaumstoff nach irgendeinem der Ansprüch 1 bis 8, dadurch gekennzeichnet, daß das vollständig aromatische Polymer ein vollständig aromatischer Polyester oder ein vollständig aromatisches Poly(esteramid) ist.

10. Schaumstoff nach Anspruch 9, dadurch gekennzeichnet, daß das vollständig aromatische Polymer einen in der Schmelze verarbeitbaren, vollständig aromatischen Polyester umfaßt, der im wesentlichen aus den wiederkehrenden Struktureinheiten I und II besteht, worin

I 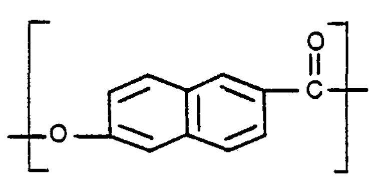 ist und

II 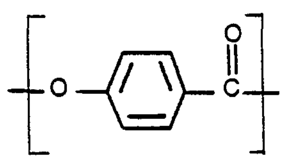 ist,

wobei der Polyester 10 bis 90 Mol-% der Struktureinheit I und 10 bis 90 Mol-% der Struktureinheit II umfaßt.

11. Schaumstoff nach Anspruch 10, dadurch gekennzeichnet, daß der Polyester 65 bis 85 Mol-% der Struktureinheit II umfaßt.

12. Schaumstoff nach Anspruch 10, dadurch gekennzeichnet, daß der Polyester 15 bis 35 Mol-% der Struktureinheit II umfaßt.

13. Schaumstoff nach Anspruch 9, dadurch gekennzeichnet, daß das vollständig aromatische Polymer einen in der Schmelze verarbeitbaren, vollständig aromatischen Polyester umfaßt, der im wesentlichen aus den wiederkehrenden Struktureinheiten I, II, III und IV besteht, worin

I 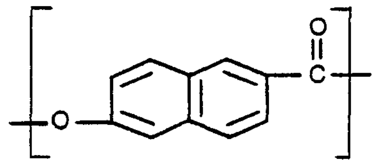 ist,

II 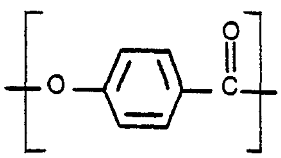 ist,

III eine Dioxyaryl-Struktureinheit der Formel $+O-Ar-O+$ ist, in der Ar ein zweiwertiger, wenigstens einen aromatischen Ring enthaltender Rest ist und

IV eine Dicarboxylaryl-Struktureinheit der Formel $+\overset{O}{\overset{\|}{C}}-Ar'-\overset{O}{\overset{\|}{C}}+$

ist, in der Ar' ein zweiwertiger, wenigstens einen aromatischen Ring enthaltender Rest ist, wobei der Polyester 20 bis 40 Mol-% der Struktureinheit I, mehr als 10 bis zu 50 Mol-% der Struktureinheit II, mehr als 5 bis zu 30 Mol-% der Struktureinheit III und mehr als 5 bis zu 30 Mol-% der Struktureinheit IV umfaßt.

14. Schaumstoff nach Anspruch 13, dadurch gekennzeichnet, daß der Polyester 20 bis 30 Mol-% der Struktureinheit I, 25 bis 40 Mol-% der Struktureinheit II, 15 bis 25 Mol-% der Struktureinheit III und 15 bis 25 Mol-% der Struktureinheit IV umfaßt.

15. Schaumstoff nach Anspruch 9, dadurch gekennzeichnet, daß das vollständig aromatische Polymer einen in der Schmelze verarbeitbaren, vollständig aromatischen Polyester umfaßt, der im wesentlichen aus den wiederkehrenden Struktureinheiten I, II und III besteht, worin

I 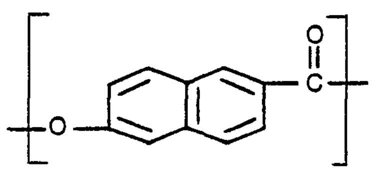 ist,

II eine Dioxyaryl-Struktureinheit der Formel $+O-Ar-O+$ ist, in der Ar ein zweiwertiger, wenigstens einen aromatischen Ring enthaltender Rest ist und

III eine Dicarboxylaryl-Struktureinheit der Formel $+\overset{O}{\overset{\|}{C}}-Ar'-\overset{O}{\overset{\|}{C}}+$

ist, in der Ar' ein zweiwertiger, wenigstens einen aromatischen Ring enthaltender Rest ist, wobei der Polyester 10 bis 90 Mol-% der Struktureinheit I, 5 bis 45 Mol-% der Struktureinheit II und 5 bis 45 Mol-% der Struktureinheit III umfaßt.

16. Schaumstoff nach Anspruch 15, dadurch gekennzeichnet, daß der Polyester 20 bis 80 Mol-% der Struktureinheit I, 10 bis 40 Mol-% der Struktureinheit II und 10 bis 40 Mol-% der Struktureinheit III umfaßt.

17. Schaumstoff nach Anspruch 9, dadurch gekennzeichnet, daß das vollständig aromatische Polymer einen in der Schmelze verarbeitbaren, vollständig aromatischen Polyester umfaßt, der im wesentlichen aus den wiederkehrenden Struktureinheiten I und II besteht, worin

I 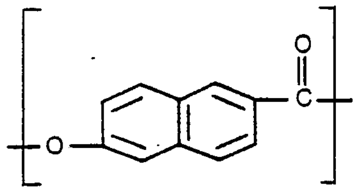 ist und

II 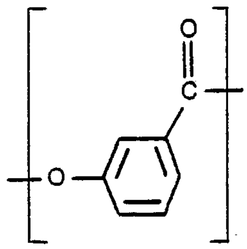 ist,

wobei der Polyester 10 bis 90 Mol-% der Struktureinheit I und 10 bis 90 Mol-% der Struktureinheit II umfaßt.

18. Schaumstoff nach Anspruch 17, dadurch gekennzeichnet, daß der Polyester 50 bis 80 Mol-% der Struktureinheit I und 20 bis 50 Mol-% der Struktureinheit II umfaßt.

19. Schaumstoff nach Anspruch 9, dadurch gekennzeichnet, daß das vollständig aromatische Polymer einen in der Schmelze verarbeitbaren, vollständig aromatischen Polyester umfaßt, der im wesentlichen aus den wiederkehrenden Struktureinheiten I, II, III und IV besteht, worin

I 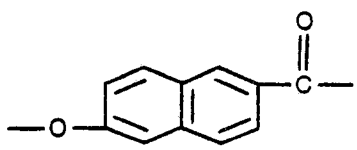 ist,

II 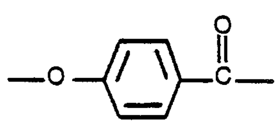 ist,

III 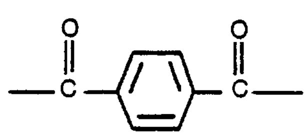 ist und

IV 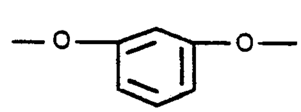 ist,

wobei der Polyester 10 bis 60 Mol-% der Struktureinheit I, 5 bis 70 Mol-% der Struktureinheit II, 10 bis 45 Mol-% der Struktureinheit III und 10 bis 45 Mol-% der Struktureinheit IV umfaßt, mit der Maßgabe, daß an den beiden Struktureinheit I und II keine Phenyloder substituierten Phenyl-Ringe vorliegen.

20. Schaumstoff nach Anspruch 19, dadurch gekennzeichnet, daß der Polyester 15 bis 25 Mol-% der Struktureinheit I, 25 bis 35 Mol-% der Struktureinheit II, 20 bis 30 Mol-% der Struktureinheit III und 20 bis 30 Mol-% der Struktureinheit IV umfaßt.

21. Schaumstoff nach Anspruch 9, dadurch gekennzeichnet, daß das vollständig aromatische Polymer

ein vollständig aromatisches Poly(esteramid) umfaßt, das im wesentlichen aus den wiederkehrenden Struktureinheiten I, II, III und (gegebenenfalls) IV besteht, worin

I 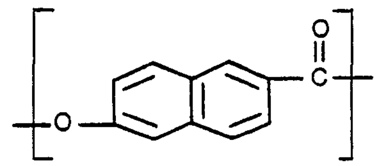 ist,

II 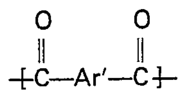

ist, worin A ein zweiwertiger, wenigstens einen aromatischen Ring enthaltender Rest ist,

III ⫟Y—Ar—Z⫟ ist, worin Ar ein zweiwertiger, wenigstens einen aromatischen Ring enthaltender Rest ist, Y O, NH oder NR ist und Z NH oder NR ist, worin R eine Alkyl-Gruppe mit 1 bis 6 Kohlenstoff-Atomen oder eine Aryl-Gruppe ist, und

IV ⫟O—Ar—O⫟ ist, worin Ar' ein zweiwertiger, wenigstens einen aromatischen Ring enthaltender Rest ist, wobei das Poly(esteramid) 10 bis 90 Mol-% der Struktureinheit I, 5 bis 45 Mol-% Struktureinheit II, 5 bis 45 Mol-% der Struktureinheit III und 0 bis 40 Mol-% der Struktureinheit IV umfaßt.

22. Schaumstoff nach Anspruch 9, dadurch gekennzeichnet, daß das vollständig aromatische Polymer einen in der Schmelze verarbeitbaren, vollständig aromatischen Polyester umfaßt, der im wesentlichen aus den wiederkehrenden Struktureinheiten I, II und III besteht, worin

I 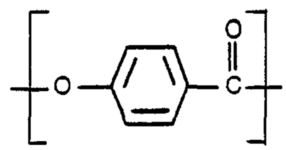 ist,

II 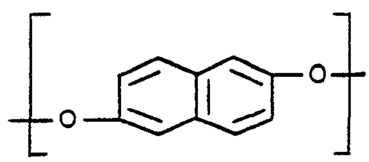 ist und

III 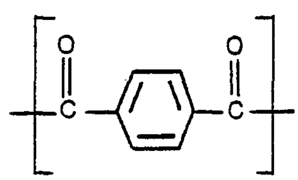 ist,

wobei der Polyester 30 bis 70 Mol-% der Struktureinheit I umfaßt.

23. Schaumstoff nach Anspruch 22, dadurch gekennzeichnet, daß der Polyester 40 bis 60 Mol-% der Struktureinheit I, 20 bis 30 Mol-% der Struktureinheit II und 20 bis 30 Mol-% der Struktureinheit III umfaßt.

24. Schaumstoff nach irgendeinem der Ansprüch 1 bis 23, dadurch gekennzeichnet, daß er bei einer Temperatur unterhalb der Schmelztemperatur des Polymers während einer Zeitspanne wärmebehandelt ist, die ausreicht, um die Schmelztemperatur des Polymers um wenigstens 10°C zu erhöhen.

25. Verfahren zum Bereitstellen eines Schaumstoffs nach Anspruch 24, umfassend das Bereitstellen eines Schaumstoffs nach irgendeinem der Ansprüche 1 bis 23 und das Einwirkenlassen einer Wärmebehandlung bei einer Temperatur unterhalb der Schmelztemperatur des Polymers auf diesen Schaumstoff während einer Zeitspanne, die ausreicht, um die Schmelztemperatur des Polymers um wenigstens 10°C zu erhöhen.

26. Verfahren nach Anspruch 25, dadurch gekennzeichnet, daß die Warmebehandlung während einer Zeitspanne und bei einer Temperatur durchgeführt wird, die ausreichen, um die Schmelztemperatrur des Polymers um 20°C bis 50°C zu erhöhen.

27. Verfahren nach Anspruch 25 oder Anspruch 26, dadurch gekennzeichnet, daß die Wärmebehandlung bei einer Temperatur von 10°C bis 30°C unterhalb des Schmelzpunktes des Polymers durchgeführt wird.

28. Verfahren nach irgendeinem der Ansprüche 25 bis 27, dadurch gekennzeichnet, daß die Zeitspanne 0,5 bis 200 h beträgt.

29. Verfahren nach Anspruch 28, dadurch gekennzeichnet, daß die Zeitspanne 1 bis 48 h beträgt.

30. Verfahren nach Anspрüch 29, dadurch gekennzeichnet, daß die Zeitspanne 5 bis 30 h beträgt.

31. Verfahren nach irgendeinem der Anspruch 25 bis 30, dadurch gekennzeichnet, daß die Wärmebehandlung in einer nicht-oxidierenden Atmosphäre durchgeführt wird.

32. Verfahren nach Anspruch 31, dadurch gekennzeichnet, daß die Wärmebehandlung in einer Stickstoff-Atmosphäre durchgeführt wird.

**Revendications:**

1. Mousse de polymère comprenant un polymère totalement aromatique rigide en mousse qui est capable de former une phase fondue anisotrope et qui ne comprend pas moins de 10 moles pour cent d'unités récurrentes qui comprennent un fragment 6-oxy-2-naphtoyle, un fragment 2,6-dioxynaphtalène ou un fragment 2,6-dicarboxynaphtalène où au moins certains des atomes d'hydrogène présents sur les noyaux aromatiques du polymère peuvent facultativement être remplacés indépendamment par des groupes alcoyles de I à 4 atomes de carbone, des groupes alcoxy de 1 à 4 atomes de carbone, un halogène, des groupes phényles ou des groupes phényles substitués.

2. Mousse de la revendication 1 où le fragment naphtalène est un fragment 6-oxy-2-naphtoyle.

3. Mousse selon la la revendication 1 ou la revendication 2 où ledit polymère totalement aromatique présente une viscosité inhérente d'au moins 2,0 dl/g lorsqu'il est dissous à une concentration de 0,1 pour cent en poids dans le pentafluorophénol à 60°C.

4. Mousse de la revendication 3 où ledit polymère totalement aromatique présente une viscosité inhérente de 2,0 à 10,0 dl/g lorsqu'il est dissous à une concentration de 0,1 pour cent en poids dans le pentafluorophénol à 60°C.

5. Mousse selon l'une quelconque des revendications 1 à 4 où ledit polymère totalement aromatique est capable de former une phase fondue anisotrope à une température inférieure à 400°C.

6. Mousse selon l'une quelconque des revendications 1 à 5 où ledit fragment naphtalène est présent en une quantité d'au moins 20 moles pour cent.

7. Mousse selon l'une quelconque des revendications 1 à 6 qui a une densité comprise entre 0,1 à 1,0 g/cm$^3$.

8. Mousse selon la revendication 7 qui a une densité de 0,3 à 0,7 g/cm$^3$.

9. Mousse selon l'une quelconque des revendications 1 à 8 où ledit polymère totalement aromatique est un polyester totalement aromatique ou un poly(ester-amide) totalement aromatique.

10. Mousse de la revendication 9 où ledit polymère totalement aromatique comprend un polyester totalement aromatique pouvant être traité en phase fondue qui consiste essentiellement en fragments récurrents I et II où:

I est 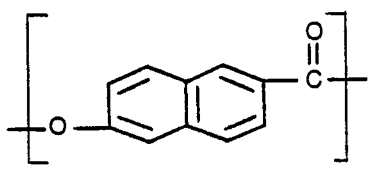 , et

II est 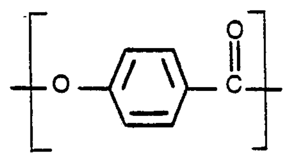

le polyester comprenant 10 à 90 moles pour cent du fragment I et 10 à 90 moles pour cent du fragment II.

11. Mousse de la revendication 10 où ledit polyester comprend 65 à 85 moles pour cent du fragment II.

12. Mousse de la revendication 10 où le polyester comprend 15 à 35 moles pour cent du fragment II.

13. Mousse de la revendication 9 où ledit polymère totalement aromatique comprend un polyester

totalement aromatique pouvant être traité en phase fondue qui consiste essentiellement en fragments récurrents I, II, III et IV où

I est 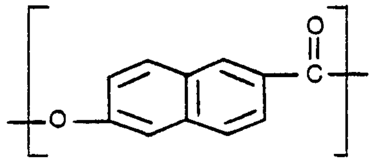

II est 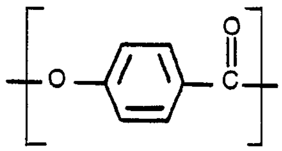

III est un fragment dioxyaryle de formule $+O-Ar-O+$ où Ar est un radical divalent comprenant au moins un noyau aromatique, et

IV est un fragment dicarboxy aryle de formule $+\overset{O}{\overset{\|}{C}}-Ar'-\overset{O}{\overset{\|}{C}}+$

où Ar' est un radical divalent comprenant au moins un noyau aromatique, le polyester comprenant 20 à 40 moles pour cent du fragment I, en excès de 10 jusqu'à 50 moles pour cent du fragment II, en excès de 5 jusqu'à 30 moles pour cent du fragment III et en excès de 5 jusqu'à 30 moles pour cent du fragment IV.

14. Mousse de la revendication 13 où le polyester comprend 20 à 30 moles pour cent fragment I, 25 à 40 moles pour cent du fragment II, 15 à 25 moles pour cent du fragment III et 15 à 25 moles pour cent du fragment IV.

15. Mousse de la revendication 9 où ledit polymère totalement aromatique comprend un polyester totalement aromatique pouvant être traité en phase fondue qui consiste essentiellement en fragments récurrents I, II et III, où:

I est 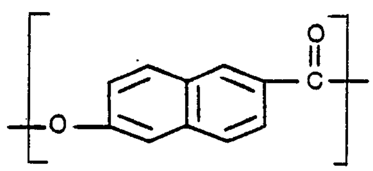 ,

II est un fragment dioxy aryle de formule $+O-Ar-O+$ où Ar est un radical divalent comprenant au moins un noyau aromatique, et

III est un fragment dicarboxy aryle de formule $+\overset{O}{\overset{\|}{C}}-Ar'-\overset{O}{\overset{\|}{C}}+$ .

où Ar' est un radical divalent comprenant au moins un noyau aromatique, le polyester comprenant 10 à 90 moles pour cent du fragment I, 5 à 45 moles pour cent du fragment II et 5 à 45 moles pour cent du fragment III.

16. Mousse de la revendication 15, où le polyester comprend 20 à 80 moles pour cent du fragment I, 10 à 40 moles pour cent du fragment II et 10 à 40 moles pour cent du fragment III.

17. Mousse de la revendication 9, où ledit polymère totalement aromatique comprend un polyester

totalement aromatique pouvant être traité en phase fondue qui consiste essentiellement en fragments récurrents I et II, où:

I est 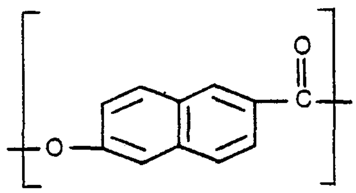 , et

II est 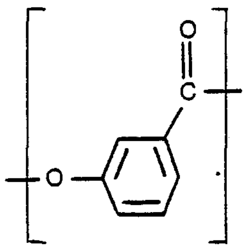 ,

le polyester comprenant 10 à 90 moles pour cent du fragment I et 10 à 90 moles pour cent du fragment II.

18. Mousse de la revendication 17, où le polyester comprend 50 à 80 moles pour cent du fragment I et 20 à 50 moles pour cent du fragment II.

19. Mousse de la revendication 9 où le polymère totalement aromatique comprend un polyester totalement aromatique pouvant être traité en phase fondue qui consiste essentiellement en fragments récurrents I, II, III et IV où:

I est 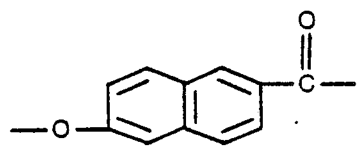 ,

II est 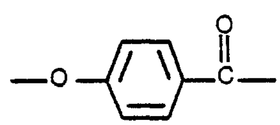 ,

III est 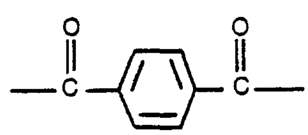 , et

IV est 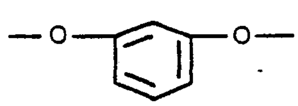 ,

le polyester comprenant 10 à 60 moles pour cent du fragment I, 5 à 70 moles pour cent du fragment II, 10 à 45 moles pour cent du fragment III et 10 à 45 moles pour cent du fragment IV, à condition qu'il n'y ait pas de noyau phényle ou phényle substitué sur l'un des fragments I ou II.

20. Mousse de la revendication 19 où le polyester comprend 15 à 25 moles pour cent du fragment I, 25 à 35 moles pour cent du fragment II, 20 à 30 moles pour cent du fragment III et 20 à 30 moles pour cent du fragment IV.

21. Mousse de la revendication 9 où ledit polymère totalement aromatique comprend un poly(ester-amide) totalement aromatique qui consiste essentiellement en fragments récurrents I, II, III et (facultativement) IV, où:

I est 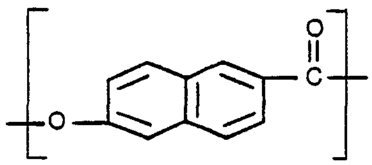

II est 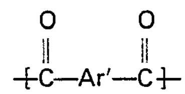

où A est un radical divalent comprenant au moins un noyau aromatique;

III est +Y—Ar—Z+, où Ar est un radical divalent comprenant au moins un noyau aromatique, Y est O, NH ou NR, et Z est NH ou NR, où R est un groupe alcoyle de 1 à 6 atomes de carbone ou un groupe aryle; et

IV est +O—Ar'—O+, où Ar' est un radical divalent comprenant au moins un noyau aromatique; où ledit poly(ester-amide) comprend 10 à 90 moles pour cent du fragment I, 5 à 45 moles pour cent du fragment II, 5 à 45 pour cent du fragment III et 0 à 40 moles pour cent du fragment IV.

22. Mousse de la revendication 9 où ledit polymère totalement aromatique comprend un polyester totalement aromatique pouvant être traité en phase fondue qui consiste essentiellement en fragments récurrents I, II et III où:

I est 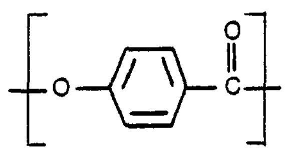

II est 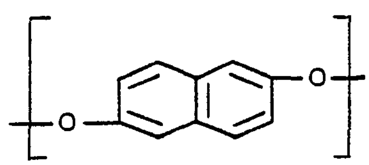

III est 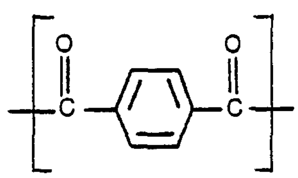 et

où ledit polyester comprend 30 à 70 moles pour cent du fragment I.

23. Mousse de la revendication 22 où le polyester comprend 40 à 60 moles pour cent du fragment I, 20 à 30 moles pour cent du fragment II et 20 à 30 moles pour cent du fragment III.

24. Mousse selon l'une quelconque des revendications 1 à 23 qui a été traitée thermiquement à une température inférieure à la température de fusion du polymère pendant un temps suffisant pour augmenter la température de fusion du polymère d'au moins 10°C.

25. Procédé de production d'une mousse selon la revendication 24 consistant à produire une mousse selon l'une quelconque des revendications 1 à 23 et à soumettre ledite mousse à un traitement thermique à une température inférieure à la température de fusion du polymère pendant un temps suffisant pour augmenter la température de fusion du polymère d'au moins 10°C.

26. Procédé selon la revendication 25 où le traitement thermique est effectué pendant une période de temps et à une température suffisantes pour augmenter la température de fusion du polymère de 20 à 50°C.

27. Procédé selon la revendication 25 ou la revendication 26 où le traitement thermique est effectué à une température de 10° à 30°C en-dessous de la température de fusion du polymère.

28. Procédé selon l'une quelconque des revendications 25 à 27 où ladite période de temps est comprise entre 0,5 et 200 heures.

29. Procédé de la revendication 28 où ladite période de temps est comprise entre 1 et 48 heures.

30. Procédé de la revendication 29 où ladite période de temps est comprise entre 5 et 30 heures.

31. Procédé selon l'une quelconque des revendications 25 à 30 où le traitement thermique est effectué dans une atmosphère non oxydante.

32. Procédé selon la revendication 31 où le traitement thermique est effectué dans une atmosphère d'azote.